# DEMANDE DE BREVET EUROPEEN

(11) **EP 4 303 736 A1**
(43) Date de publication de la demande: **10.01.2024**
(21) Numéro de dépôt: 23180825.4
(22) Date de dépôt: 22.06.2023
(51) Int. Cl.: G06F 12/14, G06F 9/50, G06F 21/60, G06F 21/71, G06F 21/55, G06F 21/74, G06F 21/79

(54) **PROCÉDÉ DE GESTION DE DROITS D'ACCÈS DE RÉGIONS MÉMOIRES ET SYSTÈME SUR PUCE CORRESPONDANT**

(30) Priorité: 04.07.2022 FR 2206736
(71) Demandeur: STMicroelectronics (Grand Ouest) SAS, 72100 Le Mans (FR)
(72) Inventeur: PALLARDY, Loic, 72700 ROUILLON (FR); DEBIEVE, Lionel, 72700 ALLONNES (FR)
(74) Mandataire: Casalonga

(57) **Abrégé**

Le procédé de gestion de droits d'accès de régions mémoires (R1, R2) d'une mémoire (MEM) comprend une attribution d'un statut de permission d'exécution (E, NE) pour chaque région mémoire dans un dispositif de pare-feu (FWL) dédié à la mémoire, de sorte que le contenu d'une région mémoire ayant un statut exécutable (E) est apte à être exécuté par un processeur (CPU), et que le contenu d'une région mémoire ayant un statut non-exécutable (NE) ne peut pas être exécuté par le processeur (CPU).

## Description

Des modes de réalisation et de mise en oeuvre concernent la gestion de droits d'accès de régions mémoires, en particulier dans un système sur puce.

Typiquement, pendant la procédure de démarrage (usuellement « boot » en anglais) des systèmes sur puce, les différents microprogrammes (usuellement « firmware » en anglais) de démarrage sont authentifiés, et éventuellement décryptés, pour la prochaine étape du microprogramme grâce à un mécanisme de signature. Cela permet de créer une chaîne de démarrage fiable.

Chaque microprogramme de démarrage a la possibilité de programmer une unité de gestion et de protection de la mémoire, typiquement une unité de protection de la mémoire « MPU » (acronymes des termes anglais usuels « Memory Protection Unit ») ou une unité de gestion de la mémoire « MMU » (acronymes des termes anglais usuels « Memory Management Unit »), pour définir les parties de la mémoire qui sont exécutables et celles qui ne le sont pas.

Mais typiquement, l'unité de gestion et de protection de la mémoire peut être désactivée avant de sauter (usuellement « jump » en anglais) dans le microprogramme suivant qui la reconfigurera en fonction de ses besoins. La désactivation de l'unité de gestion et de protection de la mémoire peut se produire dans le cas classique d'une réinitialisation (usuellement « reboot » en anglais) du processeur dans la phase de démarrage, qui réinitialise également les paramètres de l'unité de gestion et de protection de la mémoire.

En cas d'injection de fautes dans cet instant, il est possible de générer un décalage (usuellement « glitch » en anglais) sur le compteur programme (usuellement « PC » pour « program counter » en anglais) pointant sur l'adresse mémoire d'une instruction à exécuter, et ainsi de sauter dans une adresse mémoire contenant une instruction non-authentifiée ou qui n'est pas censé être exécutée.

Pour minimiser ce risque, les solutions classiques proposent d'authentifier l'image complète du contenu chargé dans la mémoire, de garantir le contenu de la mémoire par exemple en effaçant toutes les régions inutilisées pour éviter du code défectueux, de maintenir l'unité de gestion et de protection de la mémoire active lors de la réinitialisation, ou encore de prévoir une région de mémoire non-volatile spécifiquement exécutable pour le démarrage.

Ces solutions classiques présentent des difficultés dans la mesure où elles dégradent les performances du système sur puce, ou engendrent des mécanismes complexes qui dépendent des capacités du processeur et de l'unité de gestion et de protection de la mémoire, et peuvent ne pas être compatibles avec tous les microprogrammes.

Ainsi, il existe un besoin de remédier à ces inconvénients.

Des modes de mise en oeuvre et de réalisation proposent d'ajouter un nouveau statut dans un pare-feu de la mémoire pour définir une permission d'exécution pour les différentes régions mémoires, c'est-à-dire un statut exécutable ou non-exécutable, de façon comparable aux statuts de permission en lecture et de permission en écriture des régions mémoires dans les pares-feux classiques.

Ainsi, selon un aspect il est proposé un procédé de gestion de droits d'accès de régions mémoires d'une mémoire, par exemple une mémoire volatile « RAM » (acronyme des termes anglais usuels « random access memory »), comprenant une attribution d'un statut de permission d'exécution pour chaque région mémoire dans un dispositif de pare-feu dédié à la mémoire, de sorte que le contenu d'une région mémoire ayant un statut exécutable est apte à être exécuté par un processeur, et que le contenu d'une région mémoire ayant un statut non-exécutable ne peut pas être exécuté par le processeur.

En conséquence, en cas d'attaque par injection de faute et génération de « glitch » sur le compteur programme, il ne sera pas possible d'exécuter des données ou du code contenu en dehors des régions mémoires authentifiées. En outre, cela permet de mettre en oeuvre une contre-mesure logicielle puisque le compteur programme du processeur reste à l'intérieur du code authentifié.

Selon un mode de mise en oeuvre, l'attribution du statut de permission d'exécution comprend une attribution du statut non-exécutable aux régions mémoires contenant des données.

En effet, les données contenues en mémoire peuvent être lues ou écrites, mais n'ont jamais vocation à être exécutées tel un code programme enregistré en binaire dans la mémoire. Ce mode de réalisation de réalisation permet ainsi de prévenir systématiquement l'exécution erronée de données.

Selon un mode de mise en oeuvre, l'attribution du statut de permission d'exécution comprend une phase de vérification de l'authenticité du contenu des régions mémoires contenant du code programme, une attribution du statut exécutable aux régions mémoires dont le contenu est authentifié dans la phase de vérification, et une attribution du statut non-exécutable aux régions mémoires dont le contenu n'est pas authentifié dans la phase de vérification.

La phase de vérification de l'authenticité peut comprendre une mise en oeuvre d'une fonction de hachage et éventuellement d'un déchiffrement du contenu des régions mémoires.

Selon un mode de mise en oeuvre, une exécution par le processeur du contenu d'une première région mémoire comprend une deuxième phase de vérification de l'authenticité du contenu d'une deuxième région mémoire, le procédé comprenant une attribution du statut exécutable à la deuxième région mémoire si le contenu de la deuxième région mémoire est authentifié dans la deuxième phase de vérification, et une attribution du statut non-exécutable à la deuxième région mémoire si le contenu de la deuxième région mémoire n'est pas authentifié dans la deuxième phase de vérification.

Ainsi, la deuxième région mémoire peut être authentifiée une seconde fois pendant l'exécution du contenu de la première région mémoire. L'exécution du contenu de la première région peut en effet permettre d'obtenir des informations d'authentification supplémentaires pour vérifier l'authenticité de la deuxième région mémoire. Ceci est par exemple le cas lorsque la deuxième région mémoire contient une extension, propriété d'un utilisateur, dont l'authentification ne peut pas être faite par le système sur puce dans sa configuration initiale au démarrage.

Selon un mode de mise en oeuvre, le statut de permission d'exécution est attribué à chaque région mémoire dans le dispositif de pare-feu en outre d'un statut de permission de lecture et d'un statut de permission d'écriture.

Selon un mode de mise en oeuvre, les régions mémoires ayant le statut non-exécutable de permission d'exécution peuvent avoir le statut permis en lecture ou non-permis en lecture ainsi que le statut permis en écriture ou non-permis en écriture.

En effet, contrairement à des techniques classiques où l'exécution du contenu d'une région mémoire est empêché en paramétrant le statut de permission de lecture de cette région à « non-lisible », l'usage du statut de permission d'exécution permet d'accéder en lecture à une région mémoire non-exécutable. Cela permet notamment de vérifier en lecture son authenticité ou la nature de son contenu (par exemple du code binaire ou des données), sans créer de faille en matière d'exécution, par exemple en cas d'injection de faute telle que mentionnée ci-avant.

Selon un mode de mise en oeuvre, ladite attribution d'un statut de permission d'exécution comprend, pour chaque région mémoire, une attribution de différents statuts de permission d'exécution respectifs à différents processeurs, dans le dispositif de pare-feu.

Selon un autre aspect, il est proposé un système sur puce comportant un processeur, une mémoire ayant des régions mémoires, et un dispositif de pare-feu dédié à la mémoire, dans lequel un moyen de gestion de droits d'accès est configuré pour attribuer un statut de permission d'exécution pour chaque région mémoire dans le dispositif de pare-feu, le dispositif de pare-feu et le processeur étant configurés de sorte que le contenu d'une région mémoire ayant un statut exécutable est apte à être exécuté par le processeur, et que le contenu d'une région mémoire ayant un statut non-exécutable ne peut pas être exécuté par le processeur.

Selon un mode de réalisation, le moyen de gestion de droits d'accès est configuré pour attribuer le statut non-exécutable à des régions mémoire contenant des données.

Selon un mode de réalisation, le moyen de gestion de droits d'accès est configuré pour vérifier l'authenticité du contenu de régions mémoires contenant du code programme, pour attribuer le statut exécutable à des régions mémoires dont le contenu est authentifié et pour attribuer le statut non-exécutable à des régions mémoires dont le contenu n'est pas authentifié.

Selon un mode de réalisation, le moyen de gestion de droits d'accès, lors d'une exécution du contenu d'une première région mémoire par le processeur, est configuré pour vérifier deuxièmement l'authenticité du contenu d'une deuxième région mémoire, et pour attribuer le statut exécutable à la deuxième région mémoire si le contenu de la deuxième région mémoire est authentifié deuxièmement, et pour attribuer le statut non-exécutable à la deuxième région mémoire si le contenu de la deuxième région mémoire n'est pas authentifié deuxièmement.

Selon un mode de réalisation, le moyen de gestion des droits d'accès est configuré pour attribuer le statut de permission d'exécution à chaque région mémoire dans le dispositif de pare-feu en outre d'un statut de permission de lecture et d'un statut de permission d'écriture.

Selon un mode de réalisation, le moyen de gestion de droits d'accès est configuré pour attribuer le statut permis en lecture ou non-permis en lecture ainsi que le statut permis en écriture ou non-permis en écriture, aux régions mémoires ayant le statut non-exécutable de permission d'exécution.

Selon un mode de réalisation, le système sur puce comporte en outre au moins un autre processeur, et le moyen de gestion de droits d'accès est configuré pour attribuer, pour chaque région mémoire, différents statuts de permission d'exécution respectifs aux différents processeurs, dans le dispositif de pare-feu.

D'autres avantages et caractéristiques de l'invention apparaîtront à l'examen de la description détaillée de modes de mise en oeuvre et de réalisation, nullement limitatifs, et des dessins annexés, sur lesquels :
[fig.1] ;
[fig.2] ;
[fig.3] ;

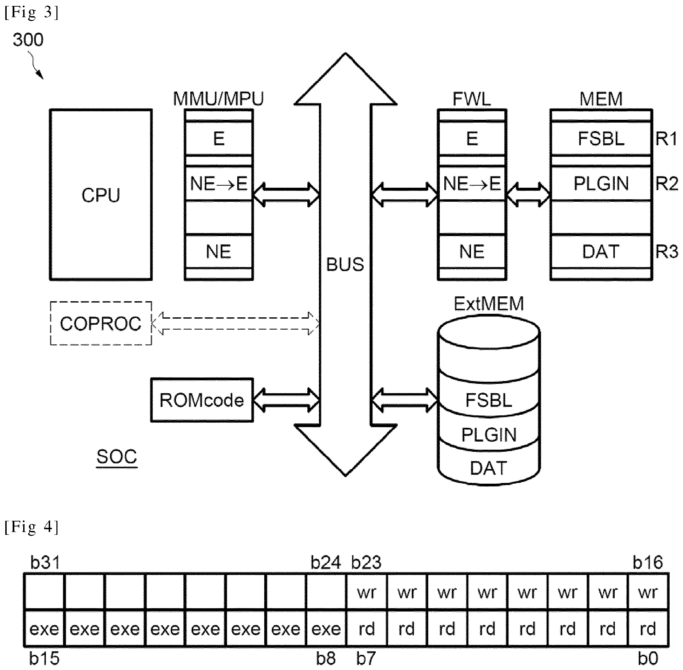

[fig.4] illustrent des modes de mise en oeuvre et de réalisation de l'invention.

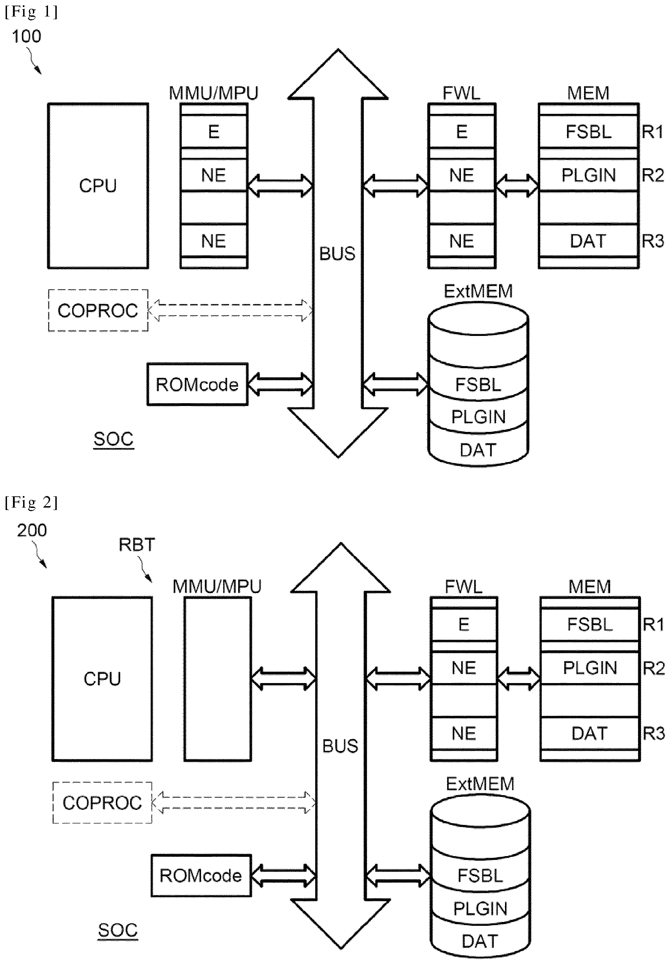

La figure 1 illustre un exemple de réalisation d'un système sur puce SOC, comportant en particulier un processeur CPU, une mémoire MEM du type mémoire vive ou « RAM », et un dispositif de pare-feu FWL dédié à la mémoire MEM.

Les différents éléments du système sur puce SOC sont interconnectés par un bus de système intégré BUS, par exemple du type « AXI » (acronyme des termes anglais usuels « Advanced eXtensible Interface »).

Le processeur CPU est avantageusement muni d'une unité de gestion et de protection de la mémoire MMU/MPU. Typiquement, selon le type et les performances du processeur CPU, l'unité de gestion et de protection de la mémoire MMU/MPU peut être une unité de protection de la mémoire « MPU » (acronymes des termes anglais usuels « Memory Protection Unit ») ou une unité de gestion de la mémoire « MMU » (acronymes des termes anglais usuels « Memory Management Unit »). L'unité de gestion et de protection de la mémoire MMU/MPU permet typiquement de contrôler les accès que le processeur CPU fait à la mémoire MEM, et en particulier en fonction d'un contexte de droits d'accès dans lequel se trouve le processeur CPU, vis-à-vis des régions mémoires R1, R2 de la mémoire MEM.

Le dispositif de pare-feu FWL est dédié à la mémoire MEM, et permet de contrôler les accès qui sont faits à la mémoire, en provenance du processeur CPU, ou d'un éventuel autre dispositif maître connecté au bus BUS. Le pare-feu FWL est configuré pour vérifier le niveau de droit d'accès d'une requête d'accès à la mémoire MEM, par rapport au niveau de droit d'accès requis pour accéder à la région mémoire R1, R2 correspondante, et autoriser ou non l'accès.

En d'autres termes, l'unité de gestion et de protection de la mémoire MMU/MPU fournit une protection liée à l'état du processeur CPU, tandis que le pare-feu FWL fournit une protection liée au contenu des régions mémoires R1, R2.

Par ailleurs, le système sur puce SOC peut comporter une mémoire non-volatile interne (usuellement « Read Only Memory » en anglais) contenant du code programme ROMcode élémentaire de démarrage du système sur puce SOC, et bénéficier en outre d'une mémoire externe de stockage de masse ExtMEM par exemple une mémoire « flash ».

Un moyen de gestion de droits d'accès est configuré pour attribuer les droits d'accès aux différentes régions mémoires R1, R2, et peut être typiquement matérialisé par un contexte sécurisé du processeur CPU.

Optionnellement, moyen de gestion de droits d'accès peut être matérialisé par un coprocesseur de sécurité COPROC dédié à la gestion des droits d'accès et à l'authentification des contenus chargés en mémoire MEM. Le coprocesseur de sécurité COPROC est notamment avantageux dans le cas où le système sur puce SOC comporte plusieurs dispositifs maîtres capables d'accéder à la mémoire, en particulier dans le cas d'un système sur puce multiprocesseur, comportant plusieurs processeurs CPU.

Par exemple, les droits d'accès peuvent comprendre conventionnellement un statut de permission de lecture « rd » (figure 4) et un statut de permission d'écriture « wr » (figure 4) pour chaque région mémoire R1, R2, et pour chaque dispositif maître CPU apte à générer une requête d'accès à la mémoire MEM.

En outre, le moyen de gestion de droits d'accès CPU, COPROC est configuré pour attribuer un statut de permission d'exécution « exe » (figure 4), pouvant être soit « exécutable » E, soit « non-exécutable » NE, pour chaque région mémoire R1, R2 dans le dispositif de pare-feu FWL, et pour chaque dispositif maître CPU apte à générer une requête d'accès à la mémoire MEM..

Les régions mémoires ayant le statut non-exécutable NE de permission d'exécution peuvent avoir indépendamment le statut permis en lecture ou non-permis en lecture ainsi que le statut permis en écriture wr ou non-permis en écriture wr.

En particulier, dans les étapes 100 et 300 décrites ci-après, les mises en oeuvre des vérifications de l'authenticité du code programme doivent avantageusement pouvoir accéder en lecture aux régions mémoires correspondantes.

Le statut non-exécutable NE permet ainsi d'autoriser la lecture des régions mémoires, sans ouvrir un risque d'exécution illicite du contenu de ces régions mémoires.

Le dispositif de pare-feu FWL et le processeur CPU sont configurés de sorte que le contenu d'une région mémoire ayant un statut exécutable E est apte à être exécuté par le processeur CPU, et que le contenu d'une région mémoire ayant un statut non-exécutable NE ne peut pas être exécuté par le processeur CPU.

En effet, les requêtes d'accès à la mémoire communiqués sur le bus BUS peuvent comporter une information représentative du fait que le contenu de la région mémoire R1, R2 accédée est destiné à être exécuté par le processeur CPU. Ceci est notamment le cas des bus de système intégré du type « AXI ».

Par exemple, l'information d'exécution peut être communiquée sous la forme d'un bit dédié dans des données d'en-tête de la requête (usuellement « header » en anglais), la requête comportant par ailleurs d'autres informations telles que l'adresse de la région mémoire à accéder.

Ainsi, une requête d'accès pour exécution à une région mémoire R2 ayant le statut non-exécutable NE dans le pare-feu FWL, sera bloquée par le pare-feu FWL et n'aboutira pas à une transmission du contenu de cette région mémoire R2 au dispositif maître CPU ayant émis la requête.

Les figures 1 à 3 illustrent des étapes 100, 200, 300 d'un exemple d'application du mécanisme de protection obtenu par le statut de permission d'exécution E, NE des contenus des région mémoire R1, R2 dans le pare-feu FWL, dans le cadre d'un démarrage initial (usuellement « boot » en anglais) du système sur puce SOC.

La figure 1 illustre à cet égard une étape 100 du processus de démarrage du système sur puce SOC, au début de laquelle le code de démarrage élémentaire ROMcode est exécuté.

Le code de démarrage élémentaire ROMcode commande par exemple un chargement d'un microprogramme FSBL binaire et d'une extension de ce microprogramme PLGIN binaire depuis la mémoire externe de stockage de masse ExtMEM, vers respectivement une première région R1 et une deuxième région R2 de la mémoire vive MEM. En outre, des données DAT peuvent être chargées dans une troisième région mémoire R3 de la mémoire vive MEM, par exemple en provenance également de la mémoire externe de stockage de masse ExtMEM.

Dans cet exemple, le microprogramme FSBL peut comporter des instructions de premières étapes de chargement de démarrage (usuellement « first stage bootloader » en anglais) et, avant son exécution, le microprogramme FSBL est authentifié par la procédure de démarrage élémentaire ROMcode.

La procédure de démarrage élémentaire ROMcode prévoit à cet égard une phase de vérification de l'authenticité du contenu des régions mémoires R1, R2 contenant du code programme FSBL, PLGIN. La phase de vérification de l'authenticité est mise en oeuvre par le moyen de gestion de droit d'accès CPU, COPROC.

Par exemple, la vérification de l'authenticité peut être faite avec un mécanisme de hachage du code binaire chargé dans les régions mémoires R1, R2, et une identification d'une signature avec une clé connue et contenue dans le code élémentaire ROMcode.

Le microprogramme FSBL peut être authentifié, c'est-à-dire validé par la phase de vérification de l'authenticité, et le statut « exécutable » E de permission d'exécution est attribué à la première région mémoire R1 dans le pare-feu FWL et dans l'unité de gestion et de protection de la mémoire MMU/MPU, par le moyen de gestion de droits d'accès CPU, COPROC.

L'extension PLGIN peut cependant provenir d'une tierce partie, et être en conséquence signée par une clé spécifique inconnue du code élémentaire de démarrage ROMcode.

En conséquence, l'extension PLGIN n'est pas authentifiée dans la phase de vérification du code élémentaire ROMcode, et le statut « non-exécutable » NE de permission d'exécution est attribué à la deuxième région mémoire R2, dans le pare-feu FWL et dans l'unité de gestion et de protection de la mémoire MMU/MPU, par le moyen de gestion de droits d'accès CPU, COPROC.

Enfin, le statut non-exécutable NE est avantageusement attribuée d'office aux régions mémoires contenant des données DAT, c'est-à-dire dans cet exemple à la troisième région mémoire R3.

Ainsi, les statuts de permission d'exécution E, NE ont été mis en place pour les contenus FSBL, PLGIN, DAT chargés dans les régions R1, R2, R3 de la mémoire MEM.

On se réfère désormais à la figure 2.

La figure 2 illustre le système sur puce SOC décrit en relation avec la figure 1, dans une deuxième étape 200 du processus de démarrage du système sur puce SOC, au cours de laquelle le microprogramme FSBL chargé dans la mémoire MEM va être exécuté par le processeur CPU.

La deuxième étape 200 comprend typiquement une réinitialisation « à chaud » RBT du processeur CPU (usuellement appelée « warm reboot » en anglais) afin de placer le processeur CPU dans un état vierge pour exécuter le microprogramme FSBL.

En conséquence, les protections paramétrées dans l'unité de gestion et de protection de la mémoire MMU/MPU sont également remises dans un état vierge par la réinitialisation RBT du processeur CPU.

Dans le cas classique, c'est-à-dire en l'absence des statuts de permission d'exécution dans le pare-feu FWL, il existe une fenêtre de vulnérabilité avant que l'unité de gestion et de protection de la mémoire MMU/MPU ne soit paramétrée à nouveau, au cours de laquelle une région mémoire R2, R3 n'ayant pas été authentifiée ou contenant des données pourrait être exécutée illégitimement.

Or, le pare-feu FWL dédié à la mémoire n'a pas été impacté par la réinitialisation RBT du processeur CPU et de l'unité de gestion et de protection de la mémoire MMU/CPU, et sa protection reste active dans cette fenêtre de vulnérabilité. Ainsi, ni le code programme non-authentifié PLGIN de la deuxième région R2, ni les données DAT de la troisième région R3 ne peuvent être exécutés.

Le microprogramme FSBL peut donc être exécuté sans risque.

On se réfère désormais à la figure 3.

La figure 3 illustre le système sur puce SOC décrit en relation avec les figures 1 et 2, dans une troisième étape 300 du processus de démarrage du système sur puce SOC, au cours de laquelle le microprogramme FSBL chargé dans la mémoire MEM est exécuté par le processeur CPU.

D'une part, l'exécution du microprogramme FSBL comprend avantageusement la remise en place du paramétrage de l'unité de gestion et de protection de la mémoire MMU/MPU, tel qu'à l'étape 100.

D'autre part, l'exécution du microprogramma FSBL peut être capable d'authentifier le code programme de l'extension PLGIN, avec une deuxième phase de vérification de l'authenticité, analogue à la première phase de vérification décrite en relation avec la figure 1, mais en connaissance de la clé spécifique provenant de la tierce partie propriétaires de l'extension PLGIN.

Ainsi, l'extension PLGIN peut être authentifiée, c'est-à-dire validé par la deuxième phase de vérification de l'authenticité, et le statut de permission d'exécution de la deuxième région mémoire R2 est mis à jour « NE→E » au statut exécutable E dans le pare-feu FWL et dans l'unité de gestion et de protection de la mémoire MMU/MPU, par le moyen de gestion de droits d'accès CPU, COPROC.

Les phases de vérification de l'authenticité mises en oeuvre dans les étapes 100 et 300 peuvent résulter à une invalidation des contenus chargés dans la mémoire MEM, par exemple en raison d'une corruption accidentelle ou fallacieuse des données chargées. Si le contenu d'une région mémoire contenant du code programme R1, R2 n'est pas authentifié, alors le statut non-exécutable NE est attribué à cette région mémoire R1, R2.

Les étapes 100, 200 et 300 ont été décrite dans une application de procédure de démarrage du système sur puce SOC, cela étant, la solution décrite dans les étapes 100, 200 et 300 peut être appliquée à tout autre chargement de programme, comportant par exemple et en particulier une réinitialisation « à chaud » RBT (« warm reset ») du processeur CPU.

La figure 4 illustre un exemple d'information contenue dans le pare-feu FWL pour attribuer les droits d'accès en lecture rd, en écriture wr, et en exécution exe.

Un registre de trente-deux (32) bits est par exemple prévu pour chaque région mémoire R1, R2, R3 de la mémoire MEM. Par exemple une région mémoire peut être une page mémoire, c'est-à-dire une unité de la segmentation physique ou fonctionnelle de la mémoire ; éventuellement, une région ayant une adresse de début et une taille définies dynamiquement en fonction du contenu stocké.

Dans cet exemple, le registre de chaque région mémoire est capable de contenir les droits d'accès particuliers de huit (8) dispositifs maîtres différents, c'est-à-dire les statuts de permission en lecture rd, en écriture wr et en exécution exe de chacun des huit (8) maîtres.

Par exemple, les huit (8) bits b0 à b7 du registre sont dédiés aux statuts de permission en lecture rd des huit (8) maîtres respectifs ; les huit (8) bits b16 à b23 du registre sont dédiés aux statuts de permission en écriture wr des huit (8) maîtres respectifs ; et les huit (8) bits b8 à b15 du registre sont dédiés aux statuts de permission en exécution exe des huit (8) maîtres respectifs. Les huit (8) bits b24 à b31 du registre peuvent être réservés à une autre application.

Ainsi, les modes de réalisation et de mise en oeuvre décrits en relation avec les figures 1 à 4, dans lesquels est ajouté un nouveau statut dans le pare-feu FWL de la mémoire vive MEM pour définir la permission d'exécution du contenu des différentes régions mémoires, fournissent une protection supplémentaire, relative à l'exécution du contenu des régions mémoires, et qui est liée au contenu de la mémoire et non à l'état du processeur.

Cette protection supplémentaire permet de prévenir une exécution illicite du contenu de la mémoire, notamment en cas d'attaque par injection de faute et de génération de « glitch » sur le compteur programme.

Il n'est en effet pas possible dans les modes de réalisation et de mise en oeuvre décrits ci-avant d'exécuter des données ou du code contenu en dehors des régions authentifiées, et des contre-mesures logicielles peuvent être exécutée dans le cadre du code authentifié.

Par ailleurs, les modes de réalisation et de mise en oeuvre décrits ci-avant présentent les avantages de ne pas être dépendant de l'architecture du processeur CPU ; d'être compatible avec les configurations actuelles des composants logiciels, notamment et en particulier avec les microprogramme à code source ouvert (usuellement « OpenSource » en anglais) ; d'être compatible dans un système à multiprocesseurs, en particulier lorsque l'authentification est déléguée au coprocesseur de sécurité COPROC ; d'être compatible avec des réinitialisations à chaud RBT du processeur CPU et de l'unité de gestion et de protection de la mémoire MMU/MPU ; et d'être basée sur le dispositif matériel de pare-feu mémoire FWL et pouvant ainsi être intégrée dans une infrastructure de sécurité.

## Revendications

1. Procédé de gestion de droits d'accès de régions mémoires (R1, R2) d'une mémoire (MEM) comprenant une attribution d'un statut de permission d'exécution (E, NE) pour chaque région mémoire dans un dispositif de pare-feu (FWL) dédié à la mémoire, de sorte que le contenu d'une région mémoire ayant un statut exécutable (E) est apte à être exécuté par un processeur (CPU), et que le contenu d'une région mémoire ayant un statut non-exécutable (NE) ne peut pas être exécuté par le processeur (CPU).

2. Procédé selon la revendication 1, dans lequel l'attribution du statut de permission d'exécution (E, NE) comprend une attribution du statut non-exécutable (NE) aux régions mémoire (R3) contenant des données (DAT).

3. Procédé selon l'une des revendications 1 ou 2, dans lequel l'attribution du statut de permission d'exécution (E, NE) comprend une phase de vérification de l'authenticité du contenu des régions mémoires (R1, R2) contenant du code programme (FSBL, PLGIN), une attribution du statut exécutable (E) aux régions mémoires dont le contenu est authentifié (FSBL) dans la phase de vérification, et une attribution du statut non-exécutable (NE) aux régions mémoires (R2) dont le contenu n'est pas authentifié (PLGIN) dans la phase de vérification.

4. Procédé selon la revendication 3, dans lequel une exécution par le processeur (CPU) du contenu d'une première région mémoire (FSBL) comprend une deuxième phase de vérification de l'authenticité du contenu d'une deuxième région mémoire (R2), le procédé comprenant une attribution du statut exécutable (E) à la deuxième région mémoire (R2) si le contenu de la deuxième région mémoire (PLGIN) est authentifié dans la deuxième phase de vérification, et une attribution du statut non-exécutable (NE) à la deuxième région mémoire (R2) si le contenu de la deuxième région mémoire (PLGIN) n'est pas authentifié dans la deuxième phase de vérification.

5. Procédé selon l'une des revendications précédentes, dans lequel le statut de permission d'exécution (exe) est attribué à chaque région mémoire dans le dispositif de pare-feu en outre d'un statut de permission de lecture (rd) et d'un statut de permission d'écriture (wr).

6. Procédé selon la revendication 5, dans lequel les régions mémoires ayant le statut non-exécutable de permission d'exécution (exe) peuvent avoir le statut permis en lecture (rd) ou non-permis en lecture (rd) ainsi que le statut permis en écriture (wr) ou non-permis en écriture (wr).

7. Procédé selon l'une des revendications précédentes, dans lequel ladite attribution d'un statut de permission d'exécution (E, NE) comprend, pour chaque région mémoire, une attribution de différents statuts de permission d'exécution (E, NE) respectifs à différents processeurs (CPU, COPROC), dans le dispositif de pare-feu (FWL).

8. Système sur puce comportant un processeur (CPU), une mémoire (MEM) ayant des régions mémoires (R1, R2), et un dispositif de pare-feu (FWL) dédié à la mémoire, dans lequel un moyen de gestion de droits d'accès (CPU, COPROC) est configuré pour attribuer un statut de permission d'exécution (E, NE) pour chaque région mémoire dans le dispositif de pare-feu (FWL), le dispositif de pare-feu et le processeur étant configurés de sorte que le contenu d'une région mémoire ayant un statut exécutable (E) est apte à être exécuté par le processeur (CPU), et que le contenu d'une région mémoire ayant un statut non-exécutable (NE) ne peut pas être exécuté par le processeur (CPU).

9. Système sur puce selon la revendication 8, dans lequel le moyen de gestion de droits d'accès (CPU, COPROC) est configuré pour attribuer le statut non-exécutable (NE) à des régions mémoire (R3) contenant des données (DAT).

10. Système sur puce selon l'une des revendications 8 ou 9, dans lequel le moyen de gestion de droits d'accès (CPU, COPROC) est configuré pour vérifier l'authenticité du contenu de régions mémoires (R1, R2) contenant du code programme (FSBL, PLGIN), pour attribuer le statut exécutable (E) à des régions mémoires dont le contenu est authentifié (FSBL) et pour attribuer le statut non-exécutable (NE) à des régions mémoires dont le contenu n'est pas authentifié (PLGIN).

11. Système sur puce selon la revendication 10, dans lequel le moyen de gestion de droits d'accès (CPU, COPROC), lors d'une exécution du contenu d'une première région mémoire (FSBL) par le processeur (CPU), est configuré pour vérifier deuxièmement l'authenticité du contenu d'une deuxième région mémoire (R2), et pour attribuer le statut exécutable (E) à la deuxième région mémoire (R2) si le contenu de la deuxième région mémoire est authentifié deuxièmement (PLGIN), et pour attribuer le statut non-exécutable (NE) à la deuxième région mémoire (R2) si le contenu de la deuxième région mémoire n'est pas authentifié deuxièmement (PLGIN).

12. Système sur puce selon l'une des revendications 8 à 11, dans lequel le moyen de gestion des droits d'accès (CPU, COPROC) est configuré pour attribuer le statut de permission d'exécution (exe) à chaque région mémoire dans le dispositif de pare-feu en outre d'un statut de permission de lecture (rd) et d'un statut de permission d'écriture (wr).

13. Système sur puce selon la revendication 12, dans lequel le moyen de gestion de droits d'accès (CPU, COPROC) est configuré pour attribuer le statut permis en lecture (rd) ou non-permis en lecture (rd) ainsi que le statut permis en écriture (wr) ou non-permis en écriture (wr), aux régions mémoires ayant le statut non-exécutable de permission d'exécution (exe).

14. Système sur puce selon l'une des revendications 8 à 13, comportant en outre au moins un autre processeur (COPROC), dans lequel le moyen de gestion de droits d'accès (CPU, COPROC) est configuré pour attribuer, pour chaque région mémoire, différents statuts de permission d'exécution (E, NE) respectifs aux différents processeurs (CPU, COPROC), dans le dispositif de pare-feu (FWL).
